# EUROPÄISCHE PATENTSCHRIFT

(11) **EP 0 545 939 B1**
(45) Veröffentlichungstag und Bekanntmachung des Hinweises auf die Patenterteilung: **22.02.1995**
(21) Anmeldenummer: 91911877.8
(22) Anmeldetag: 25.06.1991
(51) Int. Cl.: F16K 47/02, F16K 11/074

(54) **SANITÄRES WASSERVENTIL**
SANITARY WATER VALVE
ROBINET D'EAU SANITAIRE

(30) Priorität: 31.08.1990 AT 1787/90
(43) Veröffentlichungstag der Anmeldung: 16.06.1993
(73) Patentinhaber: IDEAL-STANDARD GMBH, D-53008 Bonn (DE)
(72) Erfinder: NIKOLAYCZIK, Hans, D-5561 Minheim (DE)
(74) Vertreter: Puchberger, Rolf, Dipl. Ing.
(86) Internationale Anmeldenummer: EP9101183
(87) Internationale Veröffentlichungsnummer: WO9204570

(56) Entgegenhaltungen:
- WO-A-90/08286

## Beschreibung

Die Erfindung betrifft ein sanitäres Wasserventil mit in einem Gehäuse parallel zueinanderliegenden Ventilscheiben, von denen zwei drehfest angeordnet sind, wobei eine der festen Ventilscheiben Wassereinlaßöffnungen und die andere feste Ventilscheibe Umlenkkammern aufweist und wobei eine dritte Ventilscheibe zwischen den beiden festen Ventilscheiben angeordnet und relativ zu diesen beweglich ist, sowie Wasserdurchtrittsöffnungen aufweist. Ein derartiges Wasserventil ist z.B. in der EP-A 309 443 beschrieben. Diese Art von Ventilen entwickelt jedoch durch den Aufprall des Wassers und die Ausbildung der Steuerkanten beträchtliche Geräusche und ist deshalb nur beschränkt einsetzbar.

Aus der US-PS 3 433 264 ist es bereits bekannt, zur Geräuschdämpfung Stufen zu verwenden. Zur Erreichung der Geräuschklasse I, siehe z.B. DIN 82218, ist diese Maßnahme bei der eingangs erwähnten Art von sanitärem Ventil nicht ausreichend.

Erfindungsgemäß wird vorgeschlagen, daß die bewegliche Ventilscheibe zusätzlich am Umfang Ausnehmungen für den Wasserdurchtritt aufweist und daß diese Ausnehmungen Abstufungen aufweisen, von denen eine oder mehrere mit einer Verzahnung versehen sind.

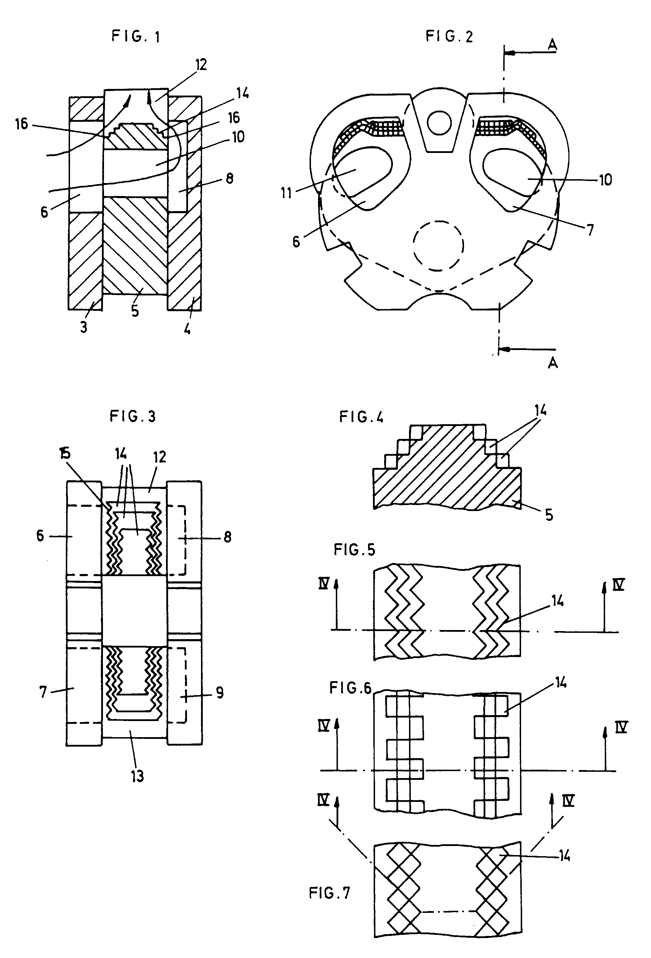

Die Erfindung ist in den Zeichnungen beispielsweise dargestellt. Fig. 1 zeigt einen Schnitt A-A der Fig. 2, Fig. 2 ist eine Draufsicht auf eine feste Wassereintrittsscheibe mit geöffneten Kalt- und Warmwasserzuläufen, Fig. 3 ist eine Draufsicht auf das Scheibenpaket, die Fig. 4 zeigt die Stufen gemäß Fig. 1 jedoch in vergrößertem Maßstab, und zwar entsprechend der Schritte IV-IV der Fig. 5, 6 und 7.
In einem sanitären Ventil, z.B. gemäß der EP-A 309 443, ist ein Paket von Dichtscheiben gemäß Fig. 1 angeordnet, d.h., es sind zwei drehfest angeordnete Ventilscheiben 3 und 4 vorgesehen, wobei die Ventilscheibe 3 Wassereintrittsöffnungen 6 und 7 für die Zuführung von kaltem und warmen Wasser Aufweist. Dieses Wasser strömt entsprechend dem Pfeil 1 entweder durch eine Durchtrittsöffnung 10 bzw. 11 in eine Umlenkkammer 8 bzw. 9 und von dort dann in eine Ausnehmung 12 oder aber das Wasser strömt gleich von der Wassereinlaßöffnung 6 bzw. 7 in die Ausnehmung 12 bzw. 13. Die Umlenkkammern 8 und 9 befinden sich in der zweiten, drehfest angeordneten Ventilscheibe 4 und zwischen den Ventilscheiben 3 und 4 befindet sich eine Verschiebbare Ventilscheibe 5, die, wie bereits erwähnt, Wasserdurchtrittsöffnungen 10 und 11 aufweist. An einem Ende begrenzt diese bewegliche Ventilscheibe 5 Ausnehmungen 12, 13. Das diese Ausnehmungen 12 bzw. 13 begrenzende Teil der beweglichen Ventilscheibe 5 wird stufenförmig ausgebildet und zusätzlich werden die Stufen 14 noch verzahnt. Diese Verzahnung ist in Fig.3 bei 15 angedeutet. Bei diesen gezahnten Stufen 14 bleibt die Steuerkante unverändert und die Verzahnung beginnt auf der ersten Stufe, die in geeignetem Abstand von der Steuerkante verläuft. Je nach Strömungsquerschnitt, Größe der Geräuschdämpfung und vorhandenem Platz können eine oder mehrere Stufen gewählt werden. Im vorliegenden Fall sind drei Stufen, z.B. mit 0,7 mm Höhe und 0,5 mm Abstand von der Steuerkante und ebenfalls 0,5 mm Abstand von Stufe zu Stufe verwendet worden. Die Verzahnung kann mit 90°, 60° oder in Form von Schlitzen ausgeführt sein und die Stufen können genau übereinanderliegen oder aber gegenseitig versetzt werden.

Die Fig.4 zeigt die Stufen gemäß Fig.1, jedoch vergrößert, und zwar entspricht die Fig.4 den Schnitten entlang der Linie IV-IV in den verschiedenen Ausführungsformen gemäß der Fig. 5, 6 und 7. Bei der Fig.5 ist eine 90°-ige Verzahnung vorgesehen und die durchgehenden Stufen verlaufen in Zick-Zack-Form. Bei der Fig.6 besteht die Verzahnung aus einzelnen Treppen, die in ihrer Tiefe versetzt zueinander verlaufen und bei der Fig.7 besteht die Verzahnung ebenfalls aus einzelnen Treppen, die jedoch schräg verlaufen.

Mit Hilfe der Erfindung ist es gelungen, ein sanitäres Ventil der eingangs erwähnten Art in die Geräuschklasse I zu bringen, ohne die Steuerungsgeometrie zu verändern bzw. den Strömungsquerschnitt und die Durchflußmenge zu beeinflussen.

## Patentansprüche

1. Sanitäres Wasserventil mit in einem Gehäuse parallel zueinanderliegenden Ventilscheiben (3, 4, 5), von denen zwei (3, 4) drehfest angeordnet sind, wobei eine der festen Ventilscheiben (3) Wassereinlaßöffnungen (6, 7) und die andere feste Ventilschiebe (4) Umlenkkammern (8, 9) aufweist, wobei eine dritte Ventilscheibe (5) zwischen den beiden festen Ventilscheiben (3, 4) angeordnet und relativ zu diesen beweglich ist sowie Wasserdurchtrittsöffnungen (10, 11) aufweist, dadurch gekennzeichnet, daß die bewegliche Ventilscheibe (5) zusätzlich am Umfang Ausnehmungen (12, 13) für den Wasserdurchtritt aufweist und daß diese Ausnehmungen (12, 13) Abstufungen (14) aufweisen, von denen eine oder mehrere mit einer Verzahnung (15) versehen sind.

2. Sanitäres Ventil nach Anspruch 1, dadurch gekennzeichnet, daß die Abstufungen (14) der Ausnehmungen (12, 13) sich beidseitig von den Dichtflächen zueinander erstrecken.

3. Sanitäres Ventil nach Anspruch 1 oder 2, dadurch gekennzeichnet, daß die an die Dichtflächen angrenzenden Steuerkanten (16) glatt sind und die Verzahnung (15) erst auf den ersten Stufen (14) beginnt.

4. Sanitäres Ventil nach einem der Ansprüche 1 bis 3, dadurch gekennzeichnet, daß die Zähne der Verzahnungen (15) von Stufe zu Stufe gegenseitig versetzt sind.

5. Sanitäres Ventil nach einem der Ansprüche 1 bis 3, dadurch gekennzeichnet, daß die Zähne der Verzahnungen (15) von Stufe zu Stufe genau übereinanderliegen.

6. Sanitäres Ventil nach einem der vorhergehenden Ansprüche, dadurch gekennzeichnet, daß die Kanten der Verzahnung (15) einen Winkel von 90° miteinander einschließen.

7. Sanitäres Ventil nach einem der vorhergehenden Ansprüche, dadurch gekennzeichnet, daß die Kanten der Verzahnung (15) einen Winkel von 60° miteinander einschließen.

8. Sanitäres Ventil nach einem der vorhergehenden Ansprüche, dadurch gekennzeichnet, daß die Verzahnung (15) in Form von Schlitzen ausgeführt ist.

## Claims

1. Sanitary water valve having valve discs (3, 4, 5) which are located parallel with one another in a casing and of which two (3, 4) are disposed in a non-rotatable manner, wherein one of the fixed valve discs (3) has water inlet apertures (6, 7) and the other fixed valve disc (4) has deflecting chambers (8, 9) and wherein a third valve disc (5) is disposed between the two fixed valve discs (3, 4), is movable in relation to the latter and has apertures (10, 11) for the passage of water, characterized in that the movable valve disc (5) also has recesses (12, 13) on the periphery for the passage of water and that these recesses (12, 13) have step systems (14) of which one or more are provided with a tooth system (15).

2. Sanitary valve according to claim 1, characterized in that the step systems (14) of the recesses (12, 13) extend towards one another from the sealing faces on both sides.

3. Sanitary valve according to Claim 1 or 2, characterized in that the control edges (16) adjoining the sealing faces are smooth and the tooth system (15) only begins on the first steps (14).

4. Sanitary valve according to one of Claims 1 to 3, characterized in that the teeth of the tooth systems (15) are mutually offset from step to step.

5. Sanitary valve according to one of Claims 1 to 3, characterized in that the teeth of the tooth systems (15) are located exactly above one another from step to step.

6. Sanitary valve according to one of the preceding claims, characterized in that the edges of the tooth system (15) form an angle of 90° with one another.

7. Sanitary valve according to one of the preceding Claims, characterized in that the edges of the tooth system (15) form an angle of 60° with one another.

8. Sanitary valve according to one of the preceding Claims, characterized in that the tooth system (15) is constructed in the form of slots.

## Revendications

1. Robinet d'eau sanitaire comportant dans un corps des disques d'obturation (3,4,5) disposés parallèlement, deux de ces disques (3,4) étant montés fixes en rotation, et l'un de ces disques fixes (3) comportant des orifices d'entrée pour l'eau (6,7), alors que l'autre disque fixe (4) comporte des chambres de déviation (8,9), un troisième disque d'obturation (5) étant monté entre les deux disques fixes (3,4) par rapport auxquels il peut se déplacer, ce troisième disque (5) comportant des orifices de passage pour l'eau (10,11), caractérisé en ce que le disque d'obturation mobile (5) présente en outre en périphérie des échancrures de passage (12,13) pour l'eau, et en ce que ces échancrures (12,13) ont des bords profilés en gradins (14) dont au moins l'un présente une arête dentelée (15).

2. Robinet sanitaire selon la revendication 1, caractérisé en ce que les bords profilés en gradins (14) des échancrures (12,13) s'étendent vis-à-vis les uns des autres en regard des deux faces d'appui étanche.

3. Robinet sanitaire selon la revendication 1 ou 2, caractérisé en ce que les arêtes d'écoulement (16) qui délimitent les faces d'appui étanche sont lisses, et en ce que la dentelure (15) commence seulement sur les premiers gradins (14).

4. Robinet sanitaire selon l'une des revendications 1 à 3, caractérisé en ce que les dents des dentelures (15) sont décalées latéralement en opposition d'un gradin à l'autre.

5. Robinet sanitaire selon l'une des revendications 1 à 3, caractérisé en ce que les dents des dentelures (15) sont exactement superposées d'un gradin à l'autre.

6. Robinet sanitaire selon l'une des revendications précédentes, caractérisé en ce que les arêtes de la dentelure (14) forment entre elles un angle de 90°.

7. Robinet sanitaire selon l'une des revendications précédentes, caractérisé en ce que les arêtes de la dentelure (15) forment entre elles un angle de 60°.

8. Robinet sanitaire selon l'une des revendications précédentes, caractérisé en ce que la dentelure (15) est réalisée sous forme de rainures.
